# EUROPEAN PATENT SPECIFICATION

(11) **EP 2 785 759 B1**
(45) Date of publication and mention of the grant of the patent: **11.03.2020**
(21) Application number: 12795267.9
(22) Date of filing: 19.11.2012
(51) Int. Cl.: C08G 18/50, C08G 18/62, C08G 18/79, C08G 18/10, C09D 175/08, C08G 18/40, C08G 18/42

(54) **COATING COMPOSITION**
BESCHICHTUNGSZUSAMMENSETZUNG
COMPOSITION DE REVÊTEMENT

(30) Priority: 30.11.2011 US 201161565063 P
(43) Date of publication of application: 08.10.2014
(73) Proprietor: Axalta Coating Systems IP Co. LLC, Wilmington, DE 19801 (US)
(72) Inventor: FLOSBACH, Carmen, 42287 Wuppertal (DE); GRAWE, Thomas, 51371 Leverkusen (DE); HOHLER, Kristina, 68766 Hockenheim (DE)
(74) Representative: LKGlobal UK Ltd.
(86) International application number: PCT/US2012/065947
(87) International publication number: WO 2013/081892

(56) References cited:
- EP-A1- 1 116 759
- WO-A1-2005/047358
- US-B2- 6 465 566
- TEMTCHENKOA T ET AL: "New developments in perfluoropolyether resin technology: high solid and durable polyurethanes for heavy duty and clear OEM coatings", PROGRESS IN ORGANIC COATINGS, ELSEVIER BV, NL, vol. 43, no. 1-3, 1 November 2001 (2001-11-01), pages 75-84, XP002692631, ISSN: 0300-9440, DOI: 10.1016/S0300-9440(01)00214-4
- "PolyFox(TM) PF-636, PF-656, PF-6320 & PF-6520", , 1 June 2006 (2006-06-01), pages 1-2, XP055060105, Retrieved from the Internet: URL:http://www.omnova.com/products/chemica ls/documents/DiolsBrochure_2009.pdf [retrieved on 2013-04-17]

## Description

### Field of the Invention

The invention relates to a clear coating composition which can be used in a process for the preparation of an outer clear coat layer of an automotive multi-layer coating.

### Background of the Invention

Modern automotive multi-layer coatings typically comprise a two-layer topcoat consisting of a color- and/or special effect-imparting base coat layer and an outer clear coat layer on top of that base coat layer. The pigmented base coat layer provides the color of the automotive multi-layer coating and the clear coat has a protective as well as decorative function. It is desirable for the clear coat to be self-cleanable, i.e. to allow for easily washing off dirt from its surface just by the action of rain. Such clear coats are called easy-to-clean clear coats.

Easy-to-clean coating compositions have been developed which exhibit good initial self-cleanability due to a surface enrichment of hydrophobic substance in the easy-to-clean coating layer, see for example, WO 2007/104654 A1, US 2004/0127593 A1, US 5,597,874 and US 5,705,276. However, the self-cleanability of easy-to-clean clear coats often suffers over time during which the easy-to-clean clear coat layer is exposed to the weather, i.e. its self-cleanability reduces over time as compared to its initial self-cleanability.
Thus, there is still a need for clear coats exhibiting good optical appearance (smooth surface, high gloss) and having a sustainable easy-to-clean effect.

### SUMMARY OF THE INVENTION

It has been found that a coating layer, in particular a clear coat layer exhibiting good optical appearance (smooth surface, high gloss) and having a sustainable easy-to-clean effect can be produced from a coating composition, in particular a clear coat coating composition comprising a binder component having functional groups with active hydrogen and a polyisocyanate cross-linker comprising at least one isocyanate-functional urethane component which comprises a special fluorine-containing building block.

Therefore, the invention relates to a clear coat coating composition with a resin solids content comprising a cross-linkable binder component having functional groups with active hydrogen and a cross-linker component, wherein the cross-linker component comprises at least one isocyanate-functional urethane component comprising at least one aliphatic polyether polyol having -OCH₂CₙF₂ₙ₊₁ groups with n = 1 or 2 as a building block, and wherein said -OCH₂CₙF₂ₙ₊₁ groups provide the coating composition with a fluorine content of 0.1 to 3 wt.% (weight%), calculated on the resin solids content of the coating composition.

### DETAILED DESCRIPTION OF THE EMBODIMENTS

These and other features and advantages of the present invention will be more readily understood, by those of ordinary skill in the art, from a reading of the following detailed description. It is to be appreciated those certain feature of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

"Initial self-cleanability" means the maximum level of self-cleanability that an easy-to-clean clear coat layer has at the beginning of its service life. The self-cleanability of a coating layer over time can be determined by the method as described in the examples.

In this context "sustainable easy-to-clean effect" means that the initial self-cleanability hardly suffers or does even not suffer over the clear coat layer's lifetime or service life during which it experiences long-term exposure to the weather including exposure to sunlight as well as rain water to name only two strain factors.

In the description and the claims the term "aliphatic polyether polyol" is used. The phrase is intended to include moieties having linear, branched and/or cycloaliphatic groups in said polyether polyol.

In the description and the claims the term "aliphatic polyether polyol having -OCH₂CₙF₂ₙ₊₁ groups with n = 1 or 2" is used. For brevity, it is also called "fluorine-containing polyether polyol" herein.

The clear coat coating composition of the invention is a liquid coating compositions and may contain organic solvent(s). Preferably the clear coat coating composition is an organic solvent based coating composition. Organic solvent-based coating compositions are coating compositions, wherein organic solvents are used as solvent or thinner when preparing and/or applying the coating composition. Usually, organic solvent-based coating compositions contain about 20 to 80% wt.% of organic solvents, based on the total amount of the coating composition. The clear coat coating composition of the invention may have a preferred solids content of, for example, 45 to 65 wt.%.

The coating compositions of the present invention are clear coat coating compositions. Therefore, here and in the following the term clear coat coating composition is used.

The solids content of the clear coat coating composition consists of the solids contributions of the resinous constituents (the resin solids content) of the clear coat coating composition plus the solids contributions of optionally present non-volatile components like pigments, fillers (extenders) and non-volatile additives.

The resin solids content of the clear coat coating composition comprises the cross-linkable binder component having functional groups with active hydrogen and the cross-linker component. In an embodiment, the resin solids content of the clear coat coating composition consists of the cross-linkable binder component having functional groups with active hydrogen and of the at least one isocyanate-functional urethane component defined above. The resin solids content of the clear coat coating composition may be in the range of, for example, 40 to 65 wt.%, based on the total clear coat coating composition.

First of all the cross-linker component of the clear coat coating composition of the present invention shall be described more detailed.

The cross-linker component comprises at least one isocyanate-functional urethane component which comprises at least one fluorine-containing polyether polyol as a building block. In other words, the at least one fluorine-containing polyether polyol is chemically incorporated in the at least one isocyanate-functional urethane component. In still other words, the at least one fluorine-containing polyether polyol is covalently built-in in the at least one isocyanate-functional urethane component via urethane linkages which represent the result of an addition reaction between the hydroxyl groups of the at least one fluorine-containing polyether polyol and isocyanate groups. The isocyanate content of the at least one isocyanate-functional urethane component (calculated as NCO with molar mass of 42) is in the range of, for example, 5 to 25 wt.%, preferably 5 to 20 wt.% calculated on the total amount of the at least one isocyanate-functional urethane component.

As already mentioned, the at least one fluorine-containing polyether polyol has -OCH₂CₙF₂ₙ₊₁ groups with n = 1 or 2. The oxygen atom in the formula -OCH₂CₙF₂ₙ₊₁ represents an ether bridge. The fluorine-containing polyether polyol has two or more unetherified free hydroxyl groups. Preferably it is a polyether diol.

The fluorine-containing polyether polyol has a fluorine content provided by its -OCH₂CₙF₂ₙ₊₁ groups in the range of, for example, 24 to 40 wt.%.

The fluorine-containing polyether polyol may have a calculated molar mass in the range of, for example, 470 to 5000. The molar mass can be calculated from the fluorine-containing polyether polyol's empirical or structural formula, which in the case of an oligomer or polymer may take the form of an average formula.

In a preferred embodiment, the fluorine-containing polyether polyol is a polyether diol with the formula HO[CH₂C(CH₃)(CH₂OCH₂CF₃)CH₂O]ₓCH₂C(CH₃)₂CH₂-[OCH₂C(CH₃)(CH₂OCH₂CF₃)CH₂]_{y}OH with x+y = 6 on average, which is commercially available under the trade name POLYFOX™ PF-636 from OMNOVA Solutions, Fairlawn, Ohio.

In another preferred embodiment, the fluorine-containing polyether polyol is a polyether diol with the formula HO[CH₂C(CH₃)(CH₂OCH₂C₂F₅)CH₂O]ₓCH₂C(CH₃)₂CH₂-[OCH₂C(CH₃)(CH₂OCH₂C₂F₅)CH₂]_{y}OH with x+y = 6 on average, which is commercially available under the trade name POLYFOX™ PF-656 from OMNOVA Solutions, Fairlawn, Ohio.

The -OCH₂CₙF₂ₙ₊₁ groups of the at least one fluorine-containing polyether polyol chemically incorporated in the at least one isocyanate-functional urethane component provide the clear coat coating composition with a fluorine content of 0.1 to 3 wt.%, preferably 0.2 to 1.5 wt.%, calculated on the resin solids content of the clear coat coating composition. The composition of the at least one isocyanate-functional urethane component and its proportion in the cross-linking component is selected accordingly.

The total proportion of the at least one fluorine-containing polyether polyol chemically incorporated in the at least one isocyanate-functional urethane component in the clear coat coating composition may be in the range of, for example, 0.5 to 8 wt.%, preferably 0.5 to 4 wt.%, calculated on the resin solids of the clear coat coating composition.

In an embodiment, the isocyanate-functional urethane component is an isocyanate-functional polyurethane binder. The isocyanate content of the isocyanate-functional polyurethane binder (calculated as NCO with molar mass of 42) is in the range of, for example, 5 to 25 wt.%, preferably 5 to 20 wt.% calculated on the total amount of isocyanate-functional polyurethane binder. The isocyanate groups of the isocyanate-functional polyurethane binder can be free isocyanate groups or may be partially or fully reversibly blocked. Isocyanate groups can be reversibly blocked by using typical blocking agents, such as monoalcohols, oximes, phenols and ketimines.
The isocyanate-functional polyurethane binder is free of terminal groups of the formula -NHC(O)OR with R being a residue selected from the group consisting of C₁₋₁₂-alkyl residues, alkyl substituted or unsubstituted cycloaliphatic C₅₋₁₂-hydrocarbyl residues, C₁₋₅-alkoxy C₂₋₆-alkylene residues and C₁₋₅-alkyl-CO₂-C₂₋₁₂-alkylene residues. The isocyanate-functional polyurethane binder may have a number-average molar mass (Mn) in the range of, for example, 600 to 10000.

All number-average molar mass data stated herein are number-average molar masses determined or to be determined by gel permeation chromatography (GPC; divinylbenzene-cross-linked polystyrene as the immobile phase, tetrahydrofuran as the liquid phase, polystyrene standards).

The production of isocyanate-functional polyurethanes is known to the person skilled in the art; in particular, they may be produced by reacting OH-functional building blocks, i.e. polyol(s) with NCO-functional building blocks, i.e. polyisocyanate(s) in excess.

The isocyanate-functional polyurethane binders may be produced by reacting one or more polyisocyanates with one or more polyols, wherein the one or more polyols comprise the at least one fluorine-containing polyether polyol. In an embodiment, the polyol(s) consist of one or more, in particular one, fluorine-containing polyether polyol.

Examples of polyisocyanates suitable for the production of the isocyanate-functional polyurethane binder can include trisisocyanatononane and diisocyanates like 1,6-hexane diisocyanate, tetramethylxylylene diisocyanate, isophorone diisocyanate, dicyclohexylmethane diisocyanate and cyclohexane diisocyanate, but also polyisocyanates derived from these diisocyanates, like for example, uretidione or isocyanurate type polyisocyanates produced by di- or trimerization of these diisocyanates, polyisocyanates produced by reaction of these diisocyanates with water and containing biuret groups, or urethane group containing polyisocyanates produced by reaction of these diisocyanates with polyols.

As already mentioned, the at least one fluorine-containing polyether polyol may be the only polyol building block of the isocyanate-functional polyurethane binder. However, it is also possible to additionally employ other polyol building blocks. Examples of such other additional polyol building blocks suitable for the production of the isocyanate-functional polyurethane binder can include low molar mass polyols defined by empirical and structural formula as well as oligomeric or polymeric polyols with number-average molar masses of, for example, up to 800, for example, fluorine-free polyether polyols, polyester polyols, polycarbonate polyols or a combination thereof. Examples of low molar mass polyols defined by empirical and structural formula can include diols like ethylene glycol, the isomeric propane- and butanediols, 1,5-pentanediol, 1,6-hexanediol, 1,10-decanediol, 1,12-dodecanediol, 1,4-cyclohexanedimethanol, hydrogenated bisphenol A, dimer fatty alcohol, neopentyl glycol, butylethylpropanediol, the isomeric cyclohexanediols, the isomeric cyclohexanedimethanols, tricyclodecanedimethanol, but also polyols with more than two hydroxyl groups like glycerol, trimethylolpropane, trimethylolethane, pentaerythritol and dipentaerythritol, or a combination thereof.

The person skilled in the art selects the nature and proportion of the polyisocyanate(s), the fluorine-containing polyether polyol(s) and the possible additional polyol(s) for the production of the isocyanate-functional polyurethane binder in such a manner that an isocyanate-functional polyurethane binder with the above characteristics regarding isocyanate content and fluorine content provided by the -OCH₂CₙF₂ₙ₊₁ groups of the at least one fluorine-containing polyether polyol is obtained.

The isocyanate-functional polyurethane binder may be produced in the presence of a suitable organic solvent (mixture) or the production of the isocyanate-functional polyurethane binder is carried out without solvent. Polyisocyanate(s), the fluorine-containing polyether polyol(s) and the possible additional polyol(s) may here all be reacted together simultaneously or in two or more synthesis stages. When the synthesis is performed in multiple stages, the reactants may be added in the most varied order, for example, in succession or in alternating manner. The individual reactants may in each case be added in their entirety or in two or more portions. The reaction is exothermic and the reaction temperature is, for example, 60 to 100°C. The rate of addition or quantity of reactants added is accordingly determined on the basis of the degree of exothermy and the reaction mixture may be maintained within the desired temperature range by heating or cooling.

In another embodiment, the isocyanate-functional urethane component is a urethane compound with at least one isocyanate group and at least one terminal group of the formula -NHC(O)OR, wherein R is a residue selected from the group consisting of C₁₋₁₂-alkyl residues, alkyl substituted or unsubstituted cycloaliphatic C₅₋₁₂-hydrocarbyl residues, C₁₋₅-alkoxy C₂₋₆-alkylene residues and C₁₋₅-alkyl-CO₂-C₂₋₁₂-alkylene residues.

For brevity, the urethane compound with at least one isocyanate group and at least one terminal group of the formula -NHC(O)OR, wherein R has the above meaning, is also called "urethane compound A" herein. Examples of C₁₋₁₂-alkyl residues include methyl, ethyl, the isomeric propyls, the isomeric butyls and lauryl. Examples of alkyl substituted or unsubstituted cycloaliphatic C₅₋₁₂-hydrocarbyl residues include cyclohexyl, trimethylcyclohexyl and isobornyl. Examples of C₁₋₅-alkoxy C₂₋₆-alkylene residues include C₄H₉OC₂H₄-, C₂H₅OC₃H₆- and CH₃OC₃H₆-. Examples of C₁₋₅-alkyl-CO₂-C₂₋₁₂-alkylene residues include C₃H₇CO₂C₈H₁₆-. The isocyanate groups of the urethane compound A can be free isocyanate groups or can be partially or fully reversibly blocked. Isocyanate groups can be reversibly blocked by using typical blocking agents, such as monoalcohols, oximes, phenols and ketimines.

The urethane compound A may have a number-average molar mass Mn in the range of, for example, 600 to 10000. The isocyanate content of the urethane compound A (calculated as NCO with molar mass of 42) is in the range of, for example, 5 to 25 wt.%, preferably 5 to 20 wt.% calculated on the total amount of the urethane compound A. Its content of terminal urethane groups -NHC(O)OR (calculated as terminal -NHC(O)O-, molar mass = 59) can be in the range of 5 to 25 wt.-%. The terminal urethane groups -NHC(O)OR are permanently blocked isocyanate groups. The term "permanently blocked" as opposed to "reversibly blocked" does not mean that the -NHC(O)OR groups of the urethane compound A cannot, under any circumstances, re-cleave into ROH and free isocyanate groups. The term is rather directed towards a person skilled in the art of paint and coatings and it is to be understood in the present context that no such re-cleaving or practically no such re-cleaving takes place during storage, application and thermal curing of a clear coat coating composition of the invention comprising a isocyanate-functional urethane compound A.

The isocyanate-functional urethane compound A may be produced by reacting one or more polyisocyanates with one or more polyols and one or more compounds ROH, wherein the polyol(s) comprise the at least one fluorine-containing polyether polyol. In an embodiment, the polyol(s) consist of one or more, in particular one, fluorine-containing polyether polyol.

Examples of polyisocyanates suitable for the production of the isocyanate-functional urethane compound A are the same as those mentioned above as examples of polyisocyanates suitable for the production of the isocyanate-functional polyurethane binder.

As already mentioned, the at least one fluorine-containing polyether polyol may be the only polyol building block of the isocyanate-functional urethane compound A. However, it is also possible to additionally employ other polyol building blocks. Examples of such other additional polyol building blocks suitable for the production of the isocyanate-functional urethane compound A include low molar mass polyols defined by empirical and structural formula as well as oligomeric or polymeric polyols with number-average molar masses of, for example, up to 800, for example, fluorine-free polyether polyols, polyester polyols or polycarbonate polyols. Examples of low molar mass polyols defined by empirical and structural formula suitable for the production of the isocyanate-functional urethane compound A are the same as those mentioned above as examples of low molar mass polyols suitable for the production of the isocyanate-functional polyurethane binder.

The person skilled in the art selects the nature and proportion of the polyisocyanate(s), the fluorine-containing polyether polyol(s), the ROH compound(s) and the possible additional polyol(s) for the production of the isocyanate-functional urethane compound A in such a manner that a isocyanate-functional urethane compound A with the above characteristics regarding isocyanate content, -NHC(O)OR content and fluorine content provided by the -OCH₂CₙF₂ₙ₊₁ groups of the at least one fluorine-containing polyether polyol is obtained.

The preparation of the isocyanate-functional urethane compound A can be carried out using processes known to a person skilled in the art. It may, for example, be carried out in the absence or in the presence of an organic solvent (mixture) which is inert towards isocyanate groups. Polyisocyanate(s), the fluorine-containing polyether polyol(s), the possible additional polyol(s) and the ROH compound(s) may here all be reacted together simultaneously or in two or more synthesis stages. When the synthesis is performed in multiple stages, the reactants may be added in the most varied order, for example, in succession or in alternating manner. The individual reactants may in each case be added in their entirety or in two or more portions. The reaction is exothermic and the reaction temperature is, for example, 60 to 100°C. The rate of addition or quantity of reactants added is accordingly determined on the basis of the degree of exothermy and the reaction mixture may be maintained within the desired temperature range by heating or cooling.

It is preferred that the at least one isocyanate-functional urethane component comprises or even consists of the aforedisclosed isocyanate-functional polyurethane binder, which is free of terminal groups of the formula -NHC(O)OR with R being a residue selected from the group consisting of C₁₋₁₂-alkyl residues, alkyl substituted or unsubstituted cycloaliphatic C₅₋₁₂-hydrocarbyl residues, C₁₋₅-alkoxy C₂₋₆-alkylene residues and C₁₋₅-alkyl-CO₂-C₂₋₁₂-alkylene residues and/or the aforedisclosed urethane compound A. More preferred the at least one isocyanate-functional urethane component comprises or even consists of the aforedisclosed isocyanate-functional polyurethane binder, which is free of terminal groups of the formula -NHC(O)OR with R being a residue selected from the group consisting of C₁₋₁₂-alkyl residues, alkyl substituted or unsubstituted cycloaliphatic C₅₋₁₂-hydrocarbyl residues, C₁₋₅-alkoxy C₂₋₆-alkylene residues and C₁₋₅-alkyl-CO₂-C₂₋₁₂-alkylene residues.

In addition to the at least one isocyanate-functional urethane component, the cross-linker component may also comprise one or more other isocyanate-functional compounds as are conventionally used in the art of paint and coatings as cross-linker. In a typical embodiment, the cross-linker component consists of the isocyanate-functional urethane component or of the isocyanate-functional urethane component plus one or more other isocyanate-functional compounds. Examples of such other isocyanate-functional compounds include conventional isocyanate-functional cross-linkers known to the person skilled in the art, and they are readily available commercially or may be prepared by conventional synthesis procedures. Examples of particularly suitable polyisocyanates are what are known as "paint polyisocyanates" based on hexamethylene diisocyanate (HDI), 1-isocyanato-3,3,5-trimethyl-5-isocyanatomethyl-cyclohexane (IPDI) and/or bis(isocyanatocyclohexyl)-methane and the derivatives known per se, containing biuret, allophanate, urethane and/or isocyanurate groups of these diisocyanates which, following production, are freed from surplus parent diisocyanate, preferably by distillation, with only a residue content of less than 0.5% by weight. Triisocyanates, such as, triisocyanatononan can also be used. Sterically hindered polyisocyanates are also suitable. Examples of these are 1,1,6,6-tetramethyl-hexamethylene diisocyanate, 1,5-dibutyl-penta-methyldiisocyanate, p- or m-tetramethylxylylene diisocyanate and the appropriate hydrated homologues. The additional isocyanate-functional compounds may comprise free and/or reversibly blocked isocyanate groups. It is generally preferred not to employ polyisocyanates with aromatically bonded NCO groups.

The cross-linker component may comprise in addition other cross-linking agents capable of entering into a curing reaction with functional groups with active hydrogen. Examples of other cross-linking agents include amino resin cross-linking agents, such as, melamine-formaldehyde resins; and/or trisalkoxycarbonylaminotriazine cross-linking agents.
The cross-linkable binder component has functional groups with active hydrogen. Those functional groups are capable of entering into a curing reaction with the functional groups of the cross-linking component.

The cross-linkable binder component includes monomeric, oligomeric or polymeric compounds with functional groups reactive towards the functional groups of the cross-linking component. Functional groups reactive towards the functional groups of the cross-linking component, in particular towards the isocyanate groups of the cross-linking component are groups with active hydrogen. These above compounds can be compounds in the form of low molar mass compounds defined by empirical and structural formula with molar mass in the range of 200 to 600 or oligomeric or polymeric binders. The binders are compounds with a number average molar mass (Mn) of, e.g., 500 to 500,000 g/mole, preferably of 1100 to 300,000 g/mole. The functional groups with active hydrogen may be, for example, hydroxyl groups, thiol groups, primary and/or secondary amino groups or combinations thereof. Compounds with hydroxyl groups and/or thiol groups are preferred, compounds with hydroxyl groups are most preferred.

Examples of useful compounds with functional groups with active hydrogen are described in the following.

Cross-linkable binder components with hydroxyl groups include, for example, the polyurethanes, (meth)acrylic copolymers, polyesters, polyethers and other binders, known from polyurethane chemistry to the skilled person, which are used in the formulation of clear coat coating compositions. Also, hydroxyl-functional polymer hybrid resins derived from these classes of binders can be used, for example, wherein two or more of said resin types bound by covalent bonds or in the form of interpenetrating resin molecules. They may each be used individually or in combination with one another.

Examples of suitable hydroxyl-functional polyurethanes include all polyurethane resins which are suited for clear coat coating compositions and known to a skilled person. Examples are polyurethane resins, for example, with a number average molar mass Mn of 500 to 500 000 g/mol, preferably, of 1100 to 300 000 g/mol, most preferably, of 5000 to 300 000 g/mol, an acid value of 0 to 50 mg KOH/g, and a hydroxyl value of 40 to 400 mg KOH/g, preferably, of 80 to 250 mg KOH/g. Appropriate polyurethane resins which may be used are, for example, prepared by reacting compounds which are reactive with respect to isocyanate groups and polyisocyanates having at least 2 free isocyanate groups per molecule.

Examples of hydroxyl-functional (meth)acrylic copolymers include all poly(meth)acrylate resins which are suited for clear coat coating compositions and known to a skilled person. For example, they can be those with a number average molar mass Mn of 1000-20000 g/mol, preferably, of 1100-15000, an acid value of 0-50 mg KOH/g, and a hydroxyl value of 40-400 mg KOH/g, preferably, of 60-200 mg KOH/g.

The poly(meth)acrylate copolymers can be prepared by free-radical polymerization of polymerizable, olefinically unsaturated monomers, optionally, in presence of oligomeric or polymeric polyester and/or polyurethane resins.

Examples of hydroxyl-functional polyesters include all polyester resins which are suited for clear coat coating compositions, for example, hydroxyfunctional polyesters with a number average molar mass of 500-10,000 g/mol, preferably, of 1100-8000 g/mol, an acid value of 0-50 mg KOH/g, and a hydroxyl value of 40-400 mg KOH/g, preferably, of 50-200 mg KOH/g. The polyesters may be saturated or unsaturated and they may optionally be modified with fatty acids. The polyesters are produced using known processes with elimination of water from polycarboxylic acids and polyalcohols.

Thiol-functional compounds that can be used in the coating composition according to the invention are compounds in the form of low molar mass compounds defined by empirical and structural formula with molar mass in the range of 200 to 600 or oligomeric or polymeric binders. The binders are compounds with a number average molar mass (Mn) of, e.g., 500 to 500,000 g/mole, preferably of 1100 to 300,000 g/mole.

Thiol-functional compounds that can suitably be used in the coating composition according to the invention include dodecyl mercaptan, mercapto ethanol, 1 ,3-propanedithiol, 1 ,6- hexanedithiol, methylthioglycolate, 2-mercaptoacetic acid, mercaptosuccinic acid, and cysteine. Also suitable are esters of a thiol-functional carboxylic acid with a polyol, such as esters of 2-mercaptoacetic acid, 3-mercaptopropionic acid, 2-mercapto- propionic acid, 11-mercaptoundecanoic acid, and mercaptosuccinic acid. Examples of such esters include pentaerythritol tetrakis (3-mercaptopropionate), pentaerythritol tetrakis (2-mercaptoacetate), trimethylol propane tris (3- mercaptopropionate), trimethylol propane tris (2-mercaptopropionate), and trimethylol propane tris (2-mercaptoacetate).

The cross-linkable binder component and the cross-linker component are used in such proportion that the equivalent ratio of functional groups with active hydrogen of the cross-linker component to the corresponding reactive groups, in particular isocyanate groups, of the cross-linker component is, for example, 5:1 to 1:5, preferably 3:1 to 1:3 and more preferred 1.5:1 to 1:1.5.

As already mentioned, the clear coat coating composition of the invention contains organic solvent(s). The organic solvent content may be, for example, 35 to 55 wt.%; the sum of the wt.% of the solids content and the organic solvent content is, for example, 90 to 100 wt.% (any possible difference in the corresponding range of above 0 to 10 wt.% to make up to the total of 100 wt.% is in general formed by volatile additives). The organic solvents are in particular conventional coating solvents, for example, glycol ethers, such as, butyl glycol, butyl diglycol, ethoxypropanol, dipropylene glycol dimethyl ether, dipropylene glycol monomethyl ether, ethylene glycol dimethylether; glycol ether esters, such as, ethyl glycol acetate, butyl glycol acetate, butyl diglycol acetate, methoxypropyl acetate; glycols, for example, propylene glycol and oligomers thereof; esters, such as, butyl acetate, isobutyl acetate, amyl acetate; ketones, such as, methyl ethyl ketone, methyl isobutyl ketone, diisobutyl ketone, cyclohexanone, isophorone; alcohols, such as, methanol, ethanol, (iso)propanol, butanol, hexanol; N-alkyl pyrrolidones, such as, N-ethyl pyrrolidone; aromatic hydrocarbons, such as, xylene, SOLVESSO® 100 (mixture of aromatic hydrocarbons with a boiling range from 155°C to 185°C), SOLVESSO® 150 (mixture of aromatic hydrocarbons with a boiling range from 182°C to 202°C) and aliphatic hydrocarbons. A combination of any of the solvents can also be used.

The clear coat coating composition may also contain volatile or non-volatile additives. Examples include catalysts, levelling agents, wetting agents, anticratering agents, dyes, rheology control agents, antioxidants and/or light stabilizers. The additives are used in conventional amounts of, for example, up to 10 wt.% in total, calculated on the resin solids of the clear coat coating composition.

The clear coat coating composition is a transparent coating composition which can be applied and cured to form a transparent clear coat layer. However, this does not necessarily exclude the presence of a small amount of pigments in the clear coat coating composition. For example, if a colored clear coat coating composition is desired, pigments may be comprised.

The clear coat coating composition may also comprise transparent fillers like, for example, silica.

The clear coat coating composition can be spray-applied to form a clear coat layer on a substrate, preferably on an automotive substrate. Therefore, the invention relates also to a process for producing an outer clear coat layer of an multi-layer coating, or, respectively, to a process for the production of a base coat/clear top coat two-layer coating. The process comprises the steps:
(1) providing a substrate provided with a pigmented base coat layer,
(2) applying the clear coat coating composition of the invention on the base coat layer to form a clear coat layer thereon, and
(3) curing the clear coat layer.

The substrate provided with the pigmented base coat layer is preferably an automotive substrate, and more preferred may be an automotive substrate to be OEM (Original Equipment Manufacture) clear coated or an automotive substrate to be repair clear coated. The term "automotive substrate to be OEM clear coated" refers to the case where the clear coat is to be applied as an original coating. The term "automotive substrate to be repair clear coated" refers to the case where the clear coat is to be applied as a refinish clear coat.

Automotive substrates include in particular automotive bodies and automotive body metal or plastic parts. Examples of automotive bodies include truck and vehicle bodies, for example, passenger car bodies and van bodies. Examples of automotive body metal or plastic parts include doors, bonnets, boot lids, hatchbacks, wings, spoilers, bumpers, collision protection strips, side trim, sills, mirror housings, door handles and hubcaps.

The pigmented base coat layer on the automotive substrate represents the color and/or special effect-imparting coating layer of the automotive multi-layer coating produced by the process of the invention. The pigmented base coat layer may have been applied from an automotive OEM base coat or from an automotive repair base coat.

The clear coat coating composition may be applied by spraying in a dry film thickness in the range of, for example, 20 to 60 µm. The clear coat application can be performed by the so-called wet-on-wet method on the uncured pigmented base coat layer. Preferably after a brief flash-off phase the clear coat layer is jointly cured together with the so far uncured pigmented base coat layer. However, the base coat layer and the clear coat layer may also be cured separately. The curing conditions depend on the binder/cross-linker system of the coating compositions and the circumstances under which the coating and curing process is carried out. The curing temperature may range from 20 to 160°C, for example. If the clear coat coating composition is used for refinish coating purposes, more gentle curing conditions may be required than in automotive OEM clear coating. Curing conditions as prevail in automotive OEM coating mean, for example, 20 to 30 minutes at an object temperature of, for example, 80 to 160°C, whereas curing conditions in refinishing may mean an object temperature of, for example, 20 to 80°C, in particular, 20 to 40 minutes at an object temperature of, for example, 40 to 80°C. The object temperatures prevailing during thermal curing are not sufficient to cleave the ROH compound(s) from the isocyanate groups blocked thereby in case the clear coat coating composition comprises the urethane compound A.

The cured multi-layer coating produced by the process of the invention, for example, the cured automotive multi-layer coating has an outer easy-to-clean clear top coat layer. Its self-cleanability is sustainable; even when exposed to the weather it hardly reduces or it does even not reduce over the clear coat layer's service life.

The clear coat coating compositions, and the process of the present invention can be used in automotive coating as described above, but may also be used in other industrial paint applications, where an outer easy-to-clean clear top coat layer or an outer easy-to-clean pigmented top coat layer with sustainable self-cleanability is desired.

### EXAMPLES

### Example 1

### Preparation of a fluorinated polvisocvanate hardener

In a reactor 72.95 grams of the trimer of 1,6-hexamethylene diisocyanate (DESMODUR® N 3600 from Bayer AG, Leverkusen, Germany) mixed with 5.6 grams of butylacetate, 33.7 grams of propylene glycol monobutyl ether acetate and 0.13 grams of dibutyltindilaurate (TIB Chemicals, Mannheim, Germany) were loaded. 15.0 grams of POLYFOX™ PF-656 (from OMNOVA Solutions, Fairlawn, Ohio) were added over 15 minutes to the reactor while keeping the temperature at 60°C. After the feed the reactor was heated for 2 hours at 60°C.

### Example 2 (Comparison)

### Preparation of a non-fluorinated polyisocyanate hardener

In a reactor 72.95 grams of the trimer of 1,6-hexamethylenediisocyanate (DESMODUR® N 3600 from Bayer AG, Leverkusen, Germany) were mixed with 5.6 grams of butylacetate and 33.7 grams of propylene glycol monobutyl ether acetate.

### Example 3

### Preparation of base paint formulation

67.6 grams of an OH-functional copolymer resin (monomer composition by weight: 62 % styrene, 21% 2-hydroxyethyl methacrylate, 11% methyl methacrylate, 6% 2-ethylhexyl methacrylate), 7.2 grams of an OH-functional branched polyester resin (polyester composition by weight: 54% 2,3-epoxypropyl neodecanoate, 36 % methyl hexahydrophthalic anhydride, 10% pentaerythritol), 6.7 grams of methyl isobutylketone, 6.7 grams butylacetate, 0.6 grams of an UV absorber and 0.01 grams of dibutyltindilaurate were mixed together as a base paint.

### Example 4

### Preparation of a fluorinated paint formulation according to the invention

95 parts by weight of the base paint of Example 3 were mixed with 42.4 parts by weight of the fluorinated polyisocyanate hardener of Example 1.

### Example 5

### Preparation of a standard paint formulation (comparison)

95 parts by weight of the base paint of Example 3 were mixed with 37.4 parts by weight of the polyisocyanate hardener of Example 2.

### Example 6

### Determination of self-cleanability properties

The self-cleanability properties of the paint formulations of Example 4 and Example 5 have been determined. The paint formulation according to the invention (Example 4) and the standard paint formulation (Example 5) have been sprayed on panels. The panels were baked 30 minutes at 60°C and the first testing was done 3 days after application.

The self-cleanability of the coated panels was tested by applying Leverkusen standard dirt 09 LD-40 (commercially available from wfk institute Krefeld, Germany) to a 4 centimeter portion of one end of the horizontally positioned panels. Dirt application was performed making use of a sieve. Three 25µl drops of deionized water were placed on the unsoiled area of the coated panel. The unsoiled end of the panel was slowly and continuously raised from the horizontal position to a 30° angle causing the water drops to move through the soiled area. After 5 minutes the position of the water drops was recorded and it was visually rated how much dirt the water drops on their move downwards was removed from the surface. The coated panels were then carefully cleaned to remove any remaining dirt and they were thereafter subjected to artificial weathering conditions (500 hours according to SAE J2527). Then the self-cleanability test was repeated followed by further cycles of artificial weathering and self-cleanability testing. Finally, self-cleanability data comprising the initial self-cleanability and self-cleanability after 500, 1000 and 2000 hours of artificial weathering were obtained and a trend was estimated, if or to what extent the self-cleanability of the coating layer reduces overtime when exposed to the weathering conditions.

The rating was done as follows:
1 = excellent dirt removal, 3 = medium dirt removal, 6 = no dirt removal;
A = water droplet completely went to the bottom of the panel, B = droplet stopped at the second half of the panel; C = droplet stopped at the first half of the panel)

**Table 1: Rating of the self-cleanability**

| | 0 hours of accelerated weathering | 500 hours of accelerated weathering | 1000 hours of accelerated weathering | 2000 hours of accelerated weathering |
|---|---|---|---|---|
| Example 4 fluorinated hardener | 1A | 1A | 1A | 1A |
| Example 5 standard hardener | 1A | 1A | 3B | 6C |

## Claims

1. A clear coating composition with a resin solids content comprising a cross-linkable binder component having functional groups with active hydrogen and a cross-linker component, wherein the cross-linker component comprises at least one isocyanate-functional urethane component comprising at least one aliphatic polyether polyol having -OCH₂CₙF₂ₙ₊₁ groups, with n = 1 or 2, as a building block, and wherein said -OCH₂CₙF₂ₙ₊₁ groups provide the clear coating composition with a fluorine content of 0.1 to 3 weight %, calculated on the resin solids content of the coating composition.

2. The clear coating composition of claim 1, additionally comprising isocyanate-functional cross-linking agents which do not comprise said aliphatic polyether polyol having -OCH₂CₙF₂ₙ₊₁ groups with n = 1 or 2 as a building block.

3. The clear coating composition of claim 1 or 2, additionally comprising amino resin cross-linking agents and/or trisalkoxy carbonyl aminotriazine cross-linking agents.

4. The clear coating composition of any one of claims 1 to 3, wherein it is an organic solvent-based coating composition.

5. The clear coating composition of any one of claims 1 to 4, wherein the at least one fluorine-containing polyether polyol has a fluorine content provided by its-OCH₂CₙF₂ₙ₊₁ groups in the range of 24 to 40 weight %.

6. The clear coating composition of any one of claims 1 to 5, wherein the at least one fluorine-containing polyether polyol is a polyether diol of the formula
HO[CH₂C(CH₃)(CH₂OCH₂CF₃)CH₂O]ₓCH₂C(CH₃)₂CH₂-[OCH₂C(CH₃)(CH₂OCH₂CF₃)CH_{2]y}OH with x+y = 6 on average.

7. The clear coating composition of any one of claims 1 to 5, wherein the at least one fluorine-containing polyether polyol is a polyether diol of the formula
HO[CH₂C(CH₃)(CH₂OCH₂C₂F₅)CH₂O]ₓCH₂C(CH₃)₂CH₂-[OCH₂C(CH₃)(CH₂OCH₂C₂F₅)CH₂]_{y}OH with x+y = 6 on average.

8. The clear coating composition of any one of claims 1 to 7, wherein the proportion of the at least one fluorine-containing polyether polyol chemically incorporated in the at least one isocyanate-functional urethane component in the clear coat coating composition is in the range of 0.5 to 8 weight %, calculated on the resin solids of the coating composition.

9. The clear coating composition of any one of claims 1 to 8, wherein the isocyanate content of the at least one isocyanate-functional urethane component (calculated as NCO with molar mass of 42) is in the range of 5 to 25 weight % calculated on the total amount of the at least one isocyanate-functional urethane component.

10. The clear coating composition of any one of claims 1 to 9, wherein the at least one isocyanate-functional urethane component is at least one isocyanate-functional polyurethane binder, which is free of terminal groups of the formula -NHC(O)OR with R being a residue selected from the group consisting of C₁₋₁₂-alkyl residues, alkyl substituted or unsubstituted cycloaliphatic C₅₋₁₂-hydrocarbyl residues, C₁₋₅-alkoxy C₂₋₆-alkylene residues and C₁₋₅-alkyl-CO₂-C₂₋₁₂-alkylene residues.

11. A process for the production of a base coat/clear top coat two-layer coating comprising the steps:
(1) providing a substrate provided with a pigmented base coat layer,
(2) applying the clear coat coating composition of any one of claims 1 to 10 on the base coat layer to form a clear coat layer thereon, and
(3) curing the base coat and the clear coat layer.

12. The process according to claim 11, wherein the substrate is an automotive substrate.

## Patentansprüche

1. Klare Beschichtungszusammensetzung mit einem Harzfeststoffgehalt umfassend eine vernetzbare Bindemittelkomponente, die funktionelle Gruppen mit aktivem Wasserstoff und eine Vernetzerkomponente aufweist, wobei die Vernetzerkomponente mindestens eine isocyanatfunktionelle Urethankomponente umfasst, die mindestens ein aliphatisches Polyetherpolyol, das -OCH₂CₙF₂ₙ₊₁-Gruppen mit n = 1 oder 2 aufweist, als Baustein umfasst und wobei die -OCH₂CₙF₂ₙ₊₁-Gruppen die klare Beschichtungszusammensetzung mit einem Fluorgehalt von 0,1 bis 3 Gew.-%, mit Bezug auf den Harzfeststoffgehalt der Beschichtungszusammensetzung berechnet, versehen.

2. Klare Beschichtungszusammensetzung nach Anspruch 1, zusätzlich isocyanatfunktionelle Vernetzungsmittel umfassend, die das aliphatische Polyetherpolyol, das -OCH₂CₙF₂ₙ₊₁-Gruppen mit n = 1 oder 2 aufweist, nicht als Baustein umfassen.

3. Klare Beschichtungszusammensetzung nach Anspruch 1 oder 2, zusätzlich Aminoharz-Vernetzungsmittel und/oder Trisalkoxycarbonylaminotriazin-Vernetzungsmittel umfassend.

4. Klare Beschichtungszusammensetzung nach einem der Ansprüche 1 bis 3, wobei sie eine Beschichtungszusammensetzung auf der Basis von organischem Lösungsmittel ist.

5. Klare Beschichtungszusammensetzung nach einem der Ansprüche 1 bis 4, wobei das mindestens eine fluorhaltige Polyetherpolyol einen Fluorgehalt, der durch seine -OCH₂CₙF₂ₙ₊₁-Gruppen bereitgestellt wird, im Bereich von 24 bis 40 Gew.-% aufweist.

6. Klare Beschichtungszusammensetzung nach einem der Ansprüche 1 bis 5, wobei das mindestens eine fluorhaltige Polyetherpolyol ein Polyetherdiol der Formel
HO[CH₂C(CH₃)(CH₂OCH₂CF₃)CH₂O]ₓCH₂C(CH₃)₂CH₂-[OCH₂C(CH₃)(CH₂OCH₂CF₃)CH₂]_{y}OH mit im Durchschnitt x+y = 6 ist.

7. Klare Beschichtungszusammensetzung nach einem der Ansprüche 1 bis 5, wobei das mindestens eine fluorhaltige Polyetherpolyol ein Polyetherdiol der Formel
HO[CH₂C(CH₃)(CH₂OCH₂C₂F₅)CH₂O]ₓCH₂C(CH₃)₂CH₂-[OCH₂C(CH₃)(CH₂OCH₂C₂F₅)CH₂]_{y}OH mit im Durchschnitt x+y = 6 ist.

8. Klare Beschichtungszusammensetzung nach einem der Ansprüche 1 bis 7, wobei der Anteil des mindestens einen fluorhaltige Polyetherpolyols, der chemisch in die mindestens eine isocyanatfunktionelle Urethankomponente in der Klarlackbeschichtungszusammensetzung integriert ist, im Bereich von 0,5 bis 8 Gew.-%, mit Bezug auf die Harzfeststoffe der Beschichtungszusammensetzung berechnet, liegt.

9. Klare Beschichtungszusammensetzung nach einem der Ansprüche 1 bis 8, wobei der Isocyanatgehalt der mindestens einen isocyanatfunktionellen Urethankomponente (als NCO mit einer Molmasse von 42 berechnet) im Bereich von 5 bis 25 Gew.-%, mit Bezug auf die Gesamtmenge der mindestens einen isocyanatfunktionellen Urethankomponente berechnet, liegt.

10. Klare Beschichtungszusammensetzung nach einem der Ansprüche 1 bis 9, wobei die mindestens eine isocyanatfunktionelle Urethankomponente mindestens ein isocyanatfunktionelles Polyurethanbindemittel ist, das frei von Terminalgruppen der Formel -NHC(O)OR ist, wobei R ein Rest ist ausgewählt aus der Gruppe bestehend aus C₁₋₁₂-Alkylresten, alkylsubstituierten oder unsubstituierten cycloaliphatischen C₅₋₁₂-Hydrocarbylresten, C₁₋₅-Alkoxy-C₂₋₆-Alkylenresten und C₁₋₅-Alkyl-CO₂-C₂₋₁₂-Alkylenresten.

11. Verfahren für die Herstellung einer zweischichtigen Grundlack-/Klardecklackbeschichtung, umfassend die Schritte:
(1) Bereitstellen eines Substrats, das mit einer pigmentierten Grundlackschicht versehen ist,
(2) Aufbringen der Klarlackbeschichtungszusammensetzung nach einem der Ansprüche 1 bis 10 auf die Grundlackschicht, um eine Klarlackschicht darauf zu bilden und
(3) Aushärten der Grundlack- und der Klarlackschicht.

12. Verfahren nach Anspruch 11, wobei das Substrat ein Fahrzeugsubstrat ist.

## Revendications

1. Composition de revêtement transparente avec une teneur en matières solides à base de résine comprenant un composant de liaison réticulable comportant des groupes fonctionnels avec un hydrogène actif et un composant de réticulation, dans laquelle le composant de réticulation comprend au moins un composant à base d'uréthane à isocyanate fonctionnel comprenant au moins un polyol de polyéther aliphatique ayant des groupes -OCH₂CₙF₂ₙ₊₁, avec n = 1 ou 2, en tant que bloc de construction, et dans laquelle lesdits groupes -OCH₂CₙF₂ₙ₊₁ fournissent la composition de revêtement transparente avec une teneur en fluor comprise entre 0,1 et 3 % en poids, calculée en fonction de la teneur en matières solides à base de résine de la composition de revêtement.

2. Composition de revêtement transparente selon la revendication 1, comprenant en outre des agents de réticulation à isocyanate fonctionnel qui ne comprennent pas ledit polyol de polyéther aliphatique ayant des groupes -OCH₂CₙF₂ₙ₊₁, avec n = 1 ou 2, en tant que bloc de construction.

3. Composition de revêtement transparente selon la revendication 1 ou la revendication 2, comprenant en outre des agents de réticulation à base de résine amino et/ou des agents de réticulation à base de trisalcoxy carbonyl aminotriazine.

4. Composition de revêtement transparente selon l'une quelconque des revendications 1 à 3, dans laquelle il s'agit d'une composition de revêtement à base de solvant organique.

5. Composition de revêtement transparente selon l'une quelconque des revendications 1 à 4, dans laquelle l'au moins un polyol de polyéther contenant du fluor a une teneur en fluor apporté par ses groupes -OCH₂CₙF₂ₙ₊₁ dans la plage comprise entre 24 et 40 % en poids.

6. Composition de revêtement transparente selon l'une quelconque des revendications 1 à 5, dans laquelle l'au moins un polyol de polyéther contenant du fluor est un diol de polyéther de formule
HO[CH₂C(CH₃)(CH₂OH₂CF₃)CH₂O]ₓCH₂C(CH₃)₂CH₂-[OCH₂C(CH₃)(CH₂OCH₂CF₃)CH₂]_{y}OH avec x + y = 6 en moyenne.

7. Composition de revêtement transparente selon l'une quelconque des revendications 1 à 5, dans laquelle l'au moins un polyol de polyéther contenant du fluor est un diol de polyéther de formule
HO[CH₂C(CH₃)(CH₂OCH₂C₂F₅)CH₂O]ₓCH₂C(CH₃)₂CH₂-[OCH₂C(CH₃)(CH₂OCH₂C₂F₅)CH₂]_{y}OH avec x + y = 6 en moyenne.

8. Composition de revêtement transparente selon l'une quelconque des revendications 1 à 7, dans laquelle la proportion de l'au moins un polyol de polyéther contenant du fluor chimiquement incorporé dans l'au moins un composant à base d'uréthane à isocyanate fonctionnel dans la composition de revêtement pour couche transparente se situe dans la plage allant de 0,5 à 8 % en poids, calculée en fonction des matières solides à base de résine de la composition de revêtement.

9. Composition de revêtement transparente selon l'une quelconque des revendications 1 à 8, dans laquelle la teneur en isocyanate de l'au moins un composant à base d'uréthane à isocyanate fonctionnel (calculée en utilisant NCO de masse molaire égale à 42) se situe dans la plage allant de 5 à 25 % en poids calculée en fonction de la quantité totale de l'au moins un composant à base d'uréthane à isocyanate fonctionnel.

10. Composition de revêtement transparente selon l'une quelconque des revendications 1 à 9, dans laquelle l'au moins un composant à base d'uréthane à isocyanate fonctionnel est au moins un liant polyuréthane à isocyanate fonctionnel, qui est exempt de groupes terminaux de formule -NHC(O)OR, R étant un résidu choisi dans le groupe constitué des résidus alkyle en C₁-C₁₂, des résidus hydrocarbyle en C₅-C₁₂ cycloaliphatiques substitués ou non substitués, des résidus C₁-C₅ alcoxy C₂-C₆ alkylène et des résidus C₁-C₅-alkyl-CO₂-C₂-C₁₂-alkylène.

11. Procédé de production d'un revêtement bicouche de revêtement de base/supérieur transparent comprenant les étapes consistant à :
(1) fournir un substrat muni d'une couche de revêtement de base pigmentée,
(2) appliquer la composition de revêtement de couche transparente selon l'une quelconque des revendications 1 à 10 sur la couche de revêtement de base afin de former une couche de revêtement transparente sur celle-ci, et
(3) cuire le revêtement de base et la couche de revêtement transparente.

12. Procédé selon la revendication 11, dans laquelle le substrat est un substrat automobile.
